# DEMANDE DE BREVET EUROPEEN

(11) **EP 1 190 950 A1**
(43) Date de publication de la demande: **27.03.2002**
(21) Numéro de dépôt: 01402284.2
(22) Date de dépôt: 03.09.2001
(51) Int. Cl.: B65D 1/02, B65D 23/08, B29C 49/22

(54) **Article de conditionnement à rigidité axiale et résistance à la casse améliorées**

(30) Priorité: 25.09.2000 FR 0012155; 21.05.2001 FR 0106658
(71) Demandeur: L'OREAL, 75008 Paris (FR)
(72) Inventeur: Rousselet, Guilhem, 75015 Paris (FR); Engels, Jean C.A., 6132 SV Sittard (NL); Beusen, Guido P.C., 6333 AA Schimmert (NL)
(74) Mandataire: Boulard, Denis

(57) **Abrégé**

La présente demande concerne un article de conditionnement, notamment sous forme d'un flacon ou d'un flacon-tube, comprenant une paroi (50) formée d'au moins une couche (51, 52), ladite paroi (50) comprenant un polypropylène à haut module de flexion, et un polyéthylène de basse ou très basse densité.

## Description

La présente invention a trait à un article de conditionnement, notamment sous forme d'un tube, d'un flacon-tube, d'un bidon, d'un flacon, ou d'un jerrican, tel que pouvant être utilisé par exemple, pour le conditionnement de bon nombre de produits ménagers, alimentaires, chimiques, ou cosmétiques.

Parmi les critères que doit remplir ce type de conditionnement, figure notamment la résistance à la casse. En effet, le matériau constituant un tel conditionnement doit être tel, que lorsqu'il tombe depuis la hauteur à laquelle on le trouve généralement (c'est à dire typiquement des mains d'un consommateur, ou depuis un plan de travail) il ne se casse pas.

En outre, le matériau doit être tel que le conditionnement présente une rigidité axiale suffisante pour supporter sans s'écraser, la pression axiale nécessaire le cas échéant, au montage, notamment par claquage, d'une capsule ou d'une tête de distribution. Une telle rigidité axiale est également nécessaire lorsqu'il s'agit, pendant leur stockage et leur transport, d'empiler les articles de conditionnement sur des palettes

De plus, le matériau doit être tel, que l'article de conditionnement puisse être fabriqué en utilisant les techniques de fabrication industrielles couramment utilisées, telles que l'injection-soufflage, l'extrusion ou la coextrusion-soufflage. A cet effet, dans le cadre notamment d'un tel processus d'extrusion soufflage, le matériau doit pouvoir se souder, notamment dans une zone située au fond de la paraison.

Enfin, le coût de revient d'un tel article de conditionnement doit être aussi bas que possible de manière à être compatible avec les impératifs économiques des circuits de grande distribution.

Il est connu de réaliser des flacons, notamment pour le conditionnement de produits cosmétiques, sous forme d'une structure mono-couche à base d'un copolymère de polypropylène, dont le module de flexion, typiquement, est de l'ordre de 800 MPa. A titre d'exemple, on peut citer le matériau commercialisé sous la marque BOREALIS™ (référence CHC 307 MO), par la société BOREALIS™. En raison de la souplesse relativement importante d'un tel matériau, pour conférer au conditionnement la résistance axiale suffisante à laquelle il a été fait référence précédemment, il est nécessaire d'avoir une paroi d'épaisseur suffisamment importante. Typiquement une telle épaisseur moyenne est de l'ordre de 800 µm. Bien évidemment, le coût de l'article de conditionnement est d'autant plus élevé que la quantité de matière première requise pour le fabriquer est importante.

Il est également connu de réaliser de tels flacons à base de polyéthylène. A titre d'exemples on peut citer les matériaux commercialisés par la société DSM™ sous la marque STAMYLAN™ (références HD 7625 ou HD 8621). Avec ces matériaux se posent les mêmes problèmes que ceux évoqués en référence au copolymère de polypropylène. Typiquement, avec ce type de matériau, l'épaisseur de la paroi est de l'ordre de 1 mm.

Pour d'autres applications, notamment dans le domaine de l'alimentaire, du ménager, ou de la chimie industrielle, l'épaisseur de la paroi peut aller jusqu'à 5 mm, voire plus. Pour ces applications, le volume du récipient peut aller jusqu'à 250 litres ou plus.

Aussi, est-ce un des objets de l'invention que de réaliser un article de conditionnement, notamment de type flacon, tube ou bidon, et résolvant en tout ou partie les problèmes discutés ci-avant en référence aux matériaux conventionnels.

C'est en particulier un objet de l'invention que de fournir un tel article de conditionnement qui soit de résistance à la casse globalement améliorée, et suffisamment rigide axialement, notamment pour résister à l'empilement, ou pour autoriser le claquage d'une tête ou capsule de distribution.

C'est un autre objet de l'invention que de fournir un tel article de conditionnement qui, à propriétés mécaniques conservées, voire améliorées (notamment en terme de résistance à la casse et de rigidité axiale) par rapport aux récipients conventionnels, requiert l'utilisation d'une moindre quantité de matière.

C'est encore un autre objet de l'invention que de réaliser un tel article de conditionnement, à un coût de revient qui soit aussi bas que possible, et qui puisse être fabriqué en utilisant les techniques industrielles connues pour la fabrication d'objets creux, telles que le roto-moulage ou tout type de soufflage, notamment l'injection-soufflage, l'extrusion-soufflage, ou la coextrusion-soufflage.

D'autres objets encore apparaîtront dans la description détaillée qui suit.

Selon l'invention, ces objets sont atteints en réalisant un article de conditionnement, notamment sous forme d'un flacon, d'un bidon ou d'un flacon-tube, comprenant une paroi formée d'au moins une couche, ladite paroi comprenant un polypropylène à haut module de flexion, et un polyéthylène de basse ou très basse densité.

Selon l'invention, le polyéthylène de basse ou très basse densité est soit en mélange avec le polypropylène à haut module de flexion, à l'intérieur d'une même couche, soit dans une couche distincte de la couche contenant le polypropylène à haut module de flexion.

Avantageusement, le polypropylène est un homopolymère. Toutefois, il est également possible d'utiliser un copolymère, à la condition qu'il ait le module de flexion requis. L'homopolymère ou le copolymère peuvent être en mélange avec au moins une charge.

Ainsi, et de manière surprenante, la demanderesse a découvert que l'ajout de polyéthylène de basse ou très basse densité à un polypropylène à haut module de flexion, en particulier à un homopolymère de polypropylène, améliorait la résistance à la casse de l'article de conditionnement, beaucoup plus qu'il ne détériorait la caractéristique relative à sa rigidité axiale.

La solution mise à jour par la présente invention, et dans laquelle on utilise un polypropylène à module de flexion plutôt haut, voire très haut, va à l'encontre des voies communément suivies jusqu'alors dans le domaine du flaconnage, et allant généralement dans le sens de l'utilisation d'un polypropylène à plus faible module de flexion.

Par rapport à un flacon réalisé seulement en polypropylène à fort module de flexion, l'article de conditionnement obtenu selon l'invention présente une résistance à la casse sensiblement améliorée, tandis que la résistance axiale n'est pas affectée de manière sensible. Ainsi, pour des performances identiques, voire meilleures, en termes de résistance à la casse et de résistance axiale, la quantité de matériau requise est plus faible que celle requise avec les matériaux classiques. Le coût de revient de l'article de conditionnement s'en trouve donc réduit d'autant.

Pour la résistance à la casse, on peut utiliser un test dit "de chute" qui sera décrit en détail par la suite en référence à des exemples spécifiques.

Pour la résistance axiale on peut utiliser un test dit "de compression à vitesse constante" et consistant à mesurer la force entraînant un affaissement prédéterminé du flacon. Pour cela, on utilise un dynamomètre utilisé en compression à une vitesse d'environ 60 mm/mn. On mesure la force nécessaire pour obtenir ledit affaissement.

A propriétés mécaniques identiques, voire améliorées, (résistance à la casse, rigidité axiale) la quantité de matière requise pour un flacon selon l'invention est de l'ordre de 5 à 50%, et de préférence de 10 à 30%, plus faible que celle requise pour le même flacon réalisé de façon conventionnelle.

Au sens de la présente invention, un haut module de flexion s'entend de préférence d'un module de flexion supérieur à 1200 MPa, et de préférence, supérieur à 1500 MPa, et de préférence encore, supérieur à 1800 MPa, et de préférence encore, supérieur à 2000 MPa. Un tel module de flexion peut être mesuré en utilisant la mesure dont les conditions figurent dans la norme ISO 178.

A titres d'exemple préférentiel, on utilise un homopolymère de polypropylène dont le module de flexion est de 2150 MPa, et commercialisé par la société MONTELL™, sous la référence ADSTIF 680 ADXP.

A titre d'exemple encore, on utilise un homopolymère de polypropylène commercialisé par la société DSM™, sous la marque STAMYLAN™ (référence P15 EK10). Le module de flexion de ce matériau particulier est de 2050 MPa.

A tire d'exemple encore, on utilise un homopolymère de polypropylène commercialisé par la société DSM™, sous la marque STAMYLAN™ (référence P12 E62). Le module de flexion de ce matériau particulier est de 1500 MPa.

A titre d'exemple encore, quoi que non préférentiel, on utilise un copolymère de polypropylène commercialisé par la société DSM™, sous la marque STAMYLAN™ (référence P83 E10N). Le module de flexion de ce matériau particulier est de 1350 MPa.

De préférence, le polypropylène a un taux de cristallinité supérieur à 40 %, et de préférence, supérieur à 50%, et de préférence encore, supérieur à 60%. La cristallinité de l'homopolymère de polypropylène peut être augmentée au moyen d'un agent nucléant, tel que le produit MILLAD™ commercialisé par la Société MILLIKEN™.

Alternativement, le module de flexion élevé du polypropylène peut être obtenu en ajoutant à du polypropylène standard (c'est à dire ayant un module de flexion inférieur à 1200 MPa), notamment à hauteur de 5 à 50% en poids, et de préférence, de 10 à 40% en poids, au moins une charge. De telles charges sont choisies parmi celles communément utilisées à cet effet, et peuvent être constituées de fibres de verre, de talc, de craie ou de sulfate de baryum. Lors de la fabrication, on part d'un polypropylène à module de flexion conventionnel, c'est à dire inférieur à 1200 MPa, auquel on ajoute, au moment de l'extrusion, la ou les charges adéquates.

Le terme "polyéthylène" désigne avantageusement un homopolymère ou copolymère d'éthylène avec jusqu'à 35% d'au moins un 1-alkene, en particulier avec 3 à 10 atomes de carbone. Le polyéthylène peut être linéaire ou radicalaire.

Un polyéthylène de basse densité s'entend d'un polyéthylène dont la densité est de préférence comprise entre environ 0,905 g/cm³ environ 0,930 g/cm³. A titre d'exemple de polyéthylène à basse densité on utilise un matériau commercialisé par la société EXXON™ sous la marque commerciale EXCEED™, et dont la densité est supérieure à 0,905 g/cm³. La densité peut être mesurée en utilisant la mesure dont les conditions figurent dans la norme ISO 1183.

De préférence toutefois, on utilise un polyéthylène de très basse densité. Un polyéthylène de très basse densité s'entend d'un polyéthylène dont la densité est de préférence inférieure à environ 0,905 g/cm³. Par ailleurs, la densité d'un polyéthylène de très basse densité est de préférence supérieure à 0,850 g/cm³, et de préférence encore, supérieure à environ 0,875 g/cm³.

De manière préférentielle, le polyéthylène de basse, ou très basse densité est obtenu par catalyse au moyen d'un catalyseur à haute sélectivité réactionnelle. Un catalyseur à haute sélectivité réactionnelle s'entend d'un catalyseur ne disposant que d'un seul type de site réactionnel, en particulier, de type métallocène. Ce catalyseur est préféré dans la mesure où les récipients ainsi obtenus conservent leurs bonnes propriétés mécaniques, même à basse température. En outre, l'augmentation de la résistance à la casse, comparativement à la diminution de la rigidité axiale, est accrue.

A titre d'exemple de polyéthylène de très basse densité obtenu par catalyse métallocène, on utilise un matériau fabriqué par la société DEX-PLASTOMERS™ sous la référence commerciale EXACT™ 0201, et dont la densité est d'environ 0,902 g/cm³.

A titre d'exemple encore, on utilise un matériau commercialisé par la société DEX-PLASTOMERS™ sous la référence commerciale EXACT™ 8201, et dont la densité est d'environ 0,882 g/cm³.

D'autres matériaux, tels que ceux commercialisés par la société DOW™, sous les marques commerciales ENGAGE™, ELITE™, ou AFFINITY™, peuvent également être utilisés.

Selon un premier mode de réalisation de l'invention, la paroi contient une première couche constituée, au moins pour partie, d'un mélange de polypropylène à haut module de flexion et d'un polyéthylène de basse ou très basse densité.

De manière avantageuse, la première couche contient 2 à 40% en poids, et de préférence, 10 à 25% de polyéthylène basse ou très basse densité. Une quantité trop faible de polyéthylène n'améliore pas de manière sensible la résistance à la casse de l'article de conditionnement. Une quantité trop importante de polyéthylène affecte de manière trop importante la rigidité axiale de l'article de conditionnement.

De manière très avantageuse, l'article de conditionnement selon l'invention comprend en outre une deuxième couche comprenant au moins en partie, un polyéthylène de basse ou très basse densité. La seconde couche est formée, de préférence à au moins 60% en poids, et de préférence encore, à au moins 70% en poids, et de préférence encore, à au moins 80% en poids, d'un polyéthylène de basse ou très basse densité.

Comme on le verra plus en détail par la suite en référence à un autre mode de réalisation de l'invention, dans ce dernier cas de figure, la première couche peut ne pas contenir de polyéthylène à basse ou très basse densité.

Le polyéthylène de basse ou très basse densité de la seconde couche peut être identique à celui entrant dans la composition de la première couche. Ceci n'est toutefois pas une obligation. En effet, il peut être avantageux d'avoir des polyéthylènes différents dans les différentes couches de manière à jouer sur les propriétés des différentes couches.

Le cas échéant, dans la seconde couche, le polyéthylène basse ou très basse densité peut être en mélange avec une polyoléfine, notamment un polypropylène ou un polyéthylène. Cette caractéristique permet, en ajoutant un matériau de coût plus faible, de réduire d'autant le coût de l'article de conditionnement. Toutefois, le polyéthylène de basse ou très basse densité doit être majoritaire dans le mélange. De préférence, le polyéthylène basse ou très basse densité représente entre 60% et 98% en poids de la couche, et de préférence encore entre 75% et 90% en poids de la couche.

La seconde couche peut être disposée soit à l'intérieur de l'article de conditionnement, soit à l'extérieur. Toutefois, de préférence, elle est disposée à l'intérieur de l'article de conditionnement. Cette disposition de la seconde couche à l'intérieur de l'article permet d'obtenir une résistance à la casse meilleure que dans le cas où la seconde couche est à l'extérieur de l'article de conditionnement.

En outre, la paroi de l'article de conditionnement peut comporter une troisième couche contenant au moins en partie un polyéthylène basse, ou très basse densité, la première couche étant disposée entre les seconde et troisième couches. La troisième couche est formée, de préférence à au moins 60% en poids, et de préférence encore, à au moins 70% en poids, et de préférence encore, à au moins 80% en poids, d'un polyéthylène de basse ou très basse densité.

Cette troisième couche améliore encore la résistance à la casse de l'article de conditionnement, sans affecter de manière sensible le module de flexion de l'ensemble. Un telle couche pourra s'avérer nécessaire pour des articles de conditionnement de plus grande contenance, ou dont la forme les rend plus sensibles à la casse.

Le matériau formant la troisième couche peut être identique à celui formant la seconde couche. Cette caractéristique favorise le procédé de coextrusion, en autorisant une source d'alimentation unique pour le matériau formant les seconde et troisième couches.

Selon un autre mode de réalisation, l'article de conditionnement selon l'invention comprend une première couche formée, au moins pour partie, d'un polypropylène ayant un haut module de flexion, et une seconde couche formée, au moins pour partie, d'un polyéthylène de basse ou très basse densité.

La seconde couche est formée, de préférence à au moins 60% en poids, et de préférence encore, à au moins 70% en poids, et de préférence encore, à au moins 80% en poids, d'un polyéthylène de basse ou très basse densité.

Selon ce mode de réalisation, l'article de conditionnement peut comprendre en outre une troisième couche, ladite première couche étant disposée entre les seconde et troisième couches.

La troisième couche peut être est formée, au moins pour partie, d'un polyéthylène de basse ou très basse densité. Elle peut être identique à la seconde couche.

De préférence, dans le cas d'une structure multi-couches, le polypropylène à haut module de flexion est disposé à l'intérieur d'une couche représentant 70 à 95%, et de préférence, 80 à 95% de l'épaisseur totale de la paroi. Ces intervalles permettent de garantir un bon compromis entre la résistance à la casse de l'article de conditionnement, et sa rigidité axiale.

La configuration de l'article de conditionnement à plusieurs couches offre une meilleure résistance à la casse tout en conservant la même rigidité axiale que celle d'un article de conditionnement à une seule couche contenant sensiblement la même quantité de polyéthylène basse ou très basse densité.

Pour des récipients du type de ceux utilisés dans le domaine de la cosmétique, l'épaisseur totale de la paroi peut aller de 450 µm à 800 µm, et de préférence, de 500 µm à 700 µm. Pour d'autres applications, pour lesquelles le volume des récipients est plus important, l'épaisseur de la paroi peut aller jusqu'à 5 mm, voire plus. Pour ces récipients de plus grand volume également, à propriétés mécaniques conservées, voire améliorées, la quantité de matière requise est sensiblement moindre que celle requise par des articles de conditionnement conventionnels.

L'article de conditionnement selon l'invention peut être utilisé par exemple pour le conditionnement d'un produit cosmétique, notamment d'un produit capillaire, d'hygiène corporelle, de soin de la peau ou de maquillage, d'un produit alimentaire, notamment d'une boisson, d'un produit ménager, notamment d'un détergent, ou d'un produit de chimie industrielle.

Selon un autre aspect de l'invention, on réalise également un procédé de fabrication d'un article de conditionnement, consistant à :
a) par extrusion, réaliser une paraison à au moins une couche, ladite paraison comprenant un polypropylène à haut module de flexion, et un polyéthylène de basse ou très basse densité ; et
b) souffler ladite paraison dans un moule comportant au moins une empreinte ayant une géométrie correspondant à celle dudit article de conditionnement.

Selon un premier mode de réalisation, la paraison comprend une première couche formée, au moins en partie, d'un polypropylène à haut module de flexion, et d'un polyéthylène de basse ou très basse densité

Avantageusement, la paraison comprend au moins deux couches superposées, la seconde couche étant disposée de préférence à l'intérieur de la paraison, et comprenant au moins en partie un polyéthylène de basse ou très basse densité.

Avantageusement, l'étape a) du procédé consiste à coextruder avec les première et seconde couches, une troisième couche contenant au moins en partie un polyéthylène de basse, ou très basse densité, la première couche étant disposée entre les seconde et troisième couches.

Selon un autre mode de réalisation, la paraison comprend une première couche formée, au moins pour partie, d'un polypropylène à haut module de flexion, et une seconde couche formée, au moins pour partie, d'un polyéthylène de basse ou très basse densité.

La paraison peut comprendre une troisième couche, ladite première couche étant disposée entre les seconde et troisième couches.

La troisième couche peut être formée, au moins pour partie, d'un polyéthylène de basse ou très basse densité.

Selon un autre mode de réalisation encore, on réalise également un procédé de fabrication d'un article de conditionnement, consistant à :
a) par injection, réaliser une préforme, ladite préforme comprenant un polypropylène à haut module de flexion, et un polyéthylène de basse ou très basse densité ; et
b) souffler ladite préforme dans un moule finisseur comportant au moins une empreinte ayant une géométrie correspondant à celle dudit article de conditionnement.

L'invention consiste, mises à part les dispositions exposées ci-dessus, en un certain nombre d'autres dispositions qui seront explicitées ci-après, à propos d'exemples de réalisation non limitatifs, décrits en référence aux figures annexées, parmi lesquelles :
- la figure 1 représente un mode de réalisation d'un article de conditionnement selon l'invention ;
- les figures 2A et 2B illustrent deux exemples de configurations possibles de la paroi de l'article de conditionnement représenté à la figure 1 ; et
- les figures 3A et 3B illustrent deux autres exemples de configurations possibles de la paroi de l'article de conditionnement représenté à la figure 1.

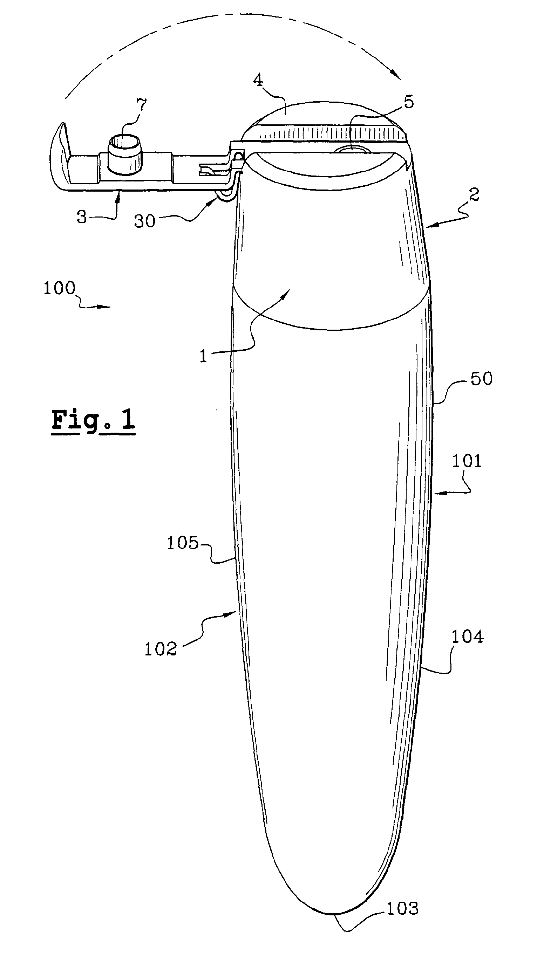

A la figure 1, l'article de conditionnement 100 selon un mode de réalisation de l'invention, est constitué d'un flacon 101. Le flacon 101 comporte un corps 102 délimité par une paroi 50, et fermé par un fond 103. Le corps 102 est de section transversale allongée et est formé de deux grandes faces 104, 105, déformables "élastiquement" sous l'effet d'une pression exercée perpendiculairement aux grands côtés du flacon.

Sur le goulot du flacon est claquée une capsule 1. La capsule 1 comporte un corps 2 sur lequel est articulé un couvercle 3, via une charnière ou articulation à effet ressort 30. Le corps 2 de la capsule 1 comporte une paroi transversale 4 dans laquelle est ménagé un renfoncement 5 au fond duquel est formé un orifice de sortie. Sur sa face destinée à venir en regard de la paroi transversale 4, le couvercle 3 porte un picot 7 apte à s'engager de manière étanche dans le renfoncement 5 de manière à assurer une bonne étanchéité à la fermeture.

Selon un premier mode de réalisation, la paroi 50 formant l'article de conditionnement 100 est d'une épaisseur d'environ 600 µm, et est formée d'une seule couche, constituée d'un mélange comprenant :
a) 75% en poids d'un homopolymère de polypropylène dont le module de flexion est de 2050 MPa, et commercialisé par la société DSM™, sous la marque STAMYLAN™ (référence P15 EK10) ; et
b) 25 % en poids d'un polyéthylène de très basse densité obtenu par catalyse métallocène. Dans cet exemple spécifique, on utilise un matériau fabriqué par la Société DEX PLASTOMERS™ sous la référence commerciale EXACT™ 0201, et dont la densité est d'environ 0,902.

Le récipient obtenu présente une très bonne rigidité axiale. Toutefois, pour un flacon dont la géométrie est voisine de celle représentée à la figure 1, et pour une contenance de 200 ml, on observe une certaine fragilité du récipient au niveau de la ligne soudure du fond, laquelle fragilité peut rendre un tel récipient inadapté à certaines utilisations, dites "grand public" et pour lesquelles, sécurité du consommateur oblige, la barrière de la résistance à la casse est placée très haut.

Une telle résistance à la casse peut être suffisante pour des applications ayant dans une moindre mesure le caractère "grand public".

La résistance à la casse des récipients a été vérifiée au moyen d'un test consistant à faire tomber l'article de conditionnement, rempli d'eau, d'une hauteur de chute de 140 cm. On peut utiliser des hauteurs de chute plus importantes ou plus faibles, en fonction des caractéristiques du récipient, notamment de son volume, et en fonction de la solidité que s'impose la société qui commercialise un tel article de conditionnement.

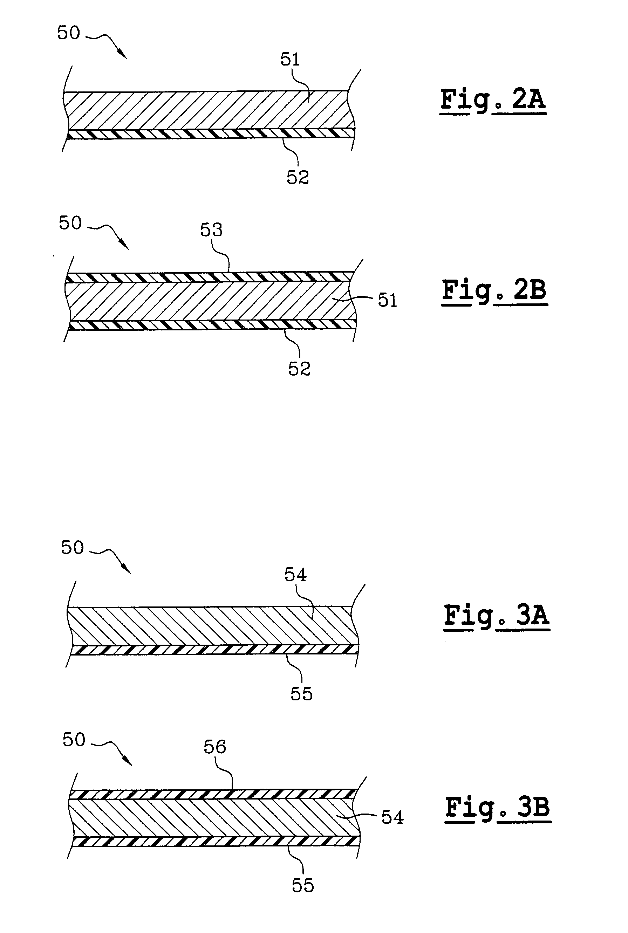

Dans le mode de réalisation de la figure 2A, la paroi 50 formant l'article de conditionnement 100 tel que représenté à la figure 1 comprend deux couches : une couche 51, externe au récipient, et une couche 52, interne au récipient.

L'épaisseur de la couche 51 est d'environ 510 µm. L'épaisseur de la couche 52 est d'environ 90 µm.

Le matériau formant la couche 51 est constitué d'un mélange formé à 85% en poids d'un homopolymère de polypropylène à très haut module de flexion (ADSTIF 680 ADXP), et à 15% en poids d'un polyéthylène de très basse densité obtenu par catalyse métallocène (EXACT™ 0201).

Le matériau formant la couche 52 est le même polyéthylène de très basse densité que celui entrant dans la fabrication de la couche 51.

L'article de conditionnement 100, obtenu par coextrusion soufflage des deux couches 51, 52, présente à la fois une bonne résistance à la casse, (y compris au niveau des soudures) et une bonne rigidité axiale.

Dans le mode de réalisation de la figure 2B, la paroi 50 formant l'article de conditionnement 100 tel que représenté à la figure 1 comprend trois couches : une couche 53, externe au récipient, une couche intermédiaire 51, et une couche 52, interne au récipient.

L'épaisseur des couches 52 et 53 est d'environ 60 µm. L'épaisseur de la couche 51 est d'environ 480 µm.

Le matériau formant la couche 51 est constitué d'un mélange formé à 80% en poids d'un homopolymère de polypropylène (STAMYLAN™ P15 EK10), et à 20% en poids d'un polyéthylène de très basse densité obtenu par catalyse métallocène (EXACT™ 8201).

Le matériau formant les couches 52 et 53 est le même polyéthylène de très basse densité que celui entrant dans la fabrication de la couche 51.

L'article de conditionnement 100, obtenu par coextrusion soufflage des trois couches 51, 52, 53, présente à la fois une bonne résistance à la casse, (notamment au niveau des soudures) et une bonne rigidité axiale.

Dans le mode de réalisation de la figure 3A, la paroi 50 comprend une couche 54 de polypropylène à haut module de flexion (STAMYLAN™ P15 EK10). L'épaisseur de la couche 54 est d'environ 600 µm.

La paroi 50 comprend également une couche 55, destinée à être disposée à l'intérieur du récipient, et formée de polyéthylène de très basse densité obtenu par catalyse métallocène (EXACT™ 8201).

L'épaisseur de la couche 55 est d'environ 66 µm.

Dans le mode de réalisation de la figure 3B, la paroi 50 comprend une couche 54 de polypropylène à haut module de flexion (STAMYLAN™ P15 EK10). L'épaisseur de la couche 54 est d'environ 600 µm.

De part et d'autre de la couche 54, sont disposées deux couches 55 et 56, chacune étant d'épaisseur environ égale à 33 µm. Chaque couche 55, 56 est formée de polyéthylène de très basse densité obtenu par catalyse métallocène (EXACT™ 8201).

L'article de conditionnement 100, obtenu pour ces deux derniers modes de réalisation, présente à la fois une bonne résistance à la casse, et une bonne rigidité axiale.

Dans la description détaillée qui précède, il a été fait référence à des modes de réalisation préférés de l'invention. Il est évident que des variantes peuvent y être apportées sans s'écarter de l'esprit de l'invention telle que revendiquée ci-après.

## Revendications

1. Article de conditionnement (100), notamment sous forme d'un flacon, d'un bidon ou d'un flacon-tube, comprenant une paroi (50) formée d'au moins une couche (51-56), ladite paroi comprenant un polypropylène à haut module de flexion, et un polyéthylène de basse ou très basse densité.

2. Article de conditionnement (100) selon la revendication 1 **caractérisé en ce que** le polypropylène à haut module de flexion est un homopolymère ou un copolymère, éventuellement en mélange avec au moins une charge.

3. Article de conditionnement (100) selon la revendication 1 ou 2 **caractérisé en ce que** le polypropylène a un module de flexion supérieur à 1200 MPa, et de préférence, supérieur à 1500 MPa, et de préférence encore, supérieur à 1800 MPa, et de préférence encore supérieur à 2000 MPa.

4. Article de conditionnement (100) selon l'une quelconque des revendications 1 à 3 **caractérisé en ce que** le polypropylène à un taux de cristallinité supérieur à 40 %, et de préférence, supérieur à 50%, et de préférence encore, supérieur à 60%.

5. Article de conditionnement (100) selon l'une quelconque des revendications 1 à 4 **caractérisé en ce que** le polypropylène est en mélange avec au moins une charge, notamment de fibres de verre, de craie, de talc, ou de sulfate de baryum.

6. Article de conditionnement (100) selon l'une quelconque des revendications 1 à 5 **caractérisé en ce que** la densité du polyéthylène de basse ou très basse densité est inférieure à 0,930 g/cm³.

7. Article de conditionnement (100) selon la revendication 6 **caractérisé en ce que** la densité du polyéthylène de basse ou très basse densité est inférieure à 0,905 g/cm³, et de préférence, supérieure à 0,850 g/cm³.

8. Article de conditionnement (100) selon l'une quelconque des revendications 1 à 7 **caractérisé en ce que** le polyéthylène de basse, ou très basse densité est obtenu par catalyse au moyen d'un catalyseur à haute sélectivité réactionnelle, notamment du type métallocène.

9. Article de conditionnement (100) selon l'une quelconque des revendications qui précèdent **caractérisé en ce que** l'épaisseur totale de la paroi (50) va de 450 µm à 800 µm, et de préférence, de 500 µm à 700 µm.

10. Article de conditionnement selon l'une quelconque des revendications précédentes **caractérisé en ce que** la paroi comprend au moins deux couches, le polypropylène à haut module de flexion étant disposé à l'intérieur d'une couche (51, 54) représentant 70 à 95%, et de préférence, 80 à 95% de l'épaisseur totale de la paroi (50).

11. Article de conditionnement selon l'une quelconque des revendications précédentes **caractérisé en ce que** la paroi (50) contient une première couche (51) constituée, au moins pour partie, d'un mélange de polypropylène à haut module de flexion et d'un polyéthylène de basse ou très basse densité.

12. Article selon la revendication 11 **caractérisé en ce qu'**il comprend au moins une seconde couche (52) disposée de préférence à l'intérieur de l'article de conditionnement, et comprenant au moins en partie, un polyéthylène de basse ou très basse densité.

13. Article de conditionnement (100) selon la revendication 11 ou 12 **caractérisé en ce que** la première couche (51) contient 2 à 40% en poids, et de préférence, 10 à 25% de polyéthylène de basse ou très basse densité.

14. Article de conditionnement (100) selon la revendication 12 ou 13, **caractérisé en ce que** dans la seconde couche (52), le polyéthylène de basse ou très basse densité est en mélange avec une polyoléfine, notamment un polypropylène ou un polyéthylène.

15. Article de conditionnement (100) selon l'une quelconque des revendications 12 à 14, **caractérisé en ce que** la paroi (50) comporte une troisième couche (53) contenant un polyéthylène de basse, ou très basse densité, la première couche (51) étant disposée entre les seconde (52) et troisième (53) couches.

16. Article de conditionnement (100) selon la revendication 15 **caractérisé en ce que** le matériau formant la troisième couche (53) est identique à celui formant la seconde couche (52).

17. Article de conditionnement selon l'une quelconque des revendications 1 à 10 **caractérisé en ce qu'**il comprend une première couche (54) formée, au moins pour partie, d'un polypropylène à haut module de flexion, et une seconde couche (55) formée, au moins pour partie, d'un polyéthylène de basse ou très basse densité.

18. Article de conditionnement selon la revendication 17 **caractérisé en ce qu'**il comprend une troisième couche (56), ladite première couche (54) étant disposée entre les seconde (55) et troisième (56) couches.

19. Article de conditionnement selon la revendication 18 **caractérisé en ce que** la troisième couche (56) est formée, au moins pour partie, d'un polyéthylène de basse ou très basse densité.

20. Utilisation d'un article de conditionnement (100) selon l'une quelconque des revendications qui précèdent pour le conditionnement d'un produit cosmétique, notamment d'un produit capillaire, d'hygiène corporelle, de soin de la peau, ou de maquillage, d'un produit alimentaire, notamment d'une boisson, d'un produit ménager, notamment d'un détergent, ou d'un produit de chimie industrielle.

21. Procédé de fabrication d'un article de conditionnement (100) selon l'une quelconque des revendications 1 à 19 **caractérisé en ce qu'**il consiste à :
a) par extrusion, réaliser une paraison à au moins une couche (51-56), ladite paraison comprenant un polypropylène à haut module de flexion, et un polyéthylène de basse ou très basse densité ; et
b) souffler ladite paraison dans un moule ayant au moins une empreinte dont la géométrie correspond à celle dudit article de conditionnement.

22. Procédé selon la revendication 21 **caractérisé en ce que** la paraison comprend une première couche (51) formée, au moins en partie, d'un polypropylène à haut module de flexion, et d'un polyéthylène de basse ou très basse densité

23. Procédé selon la revendication 22 **caractérisé en ce que** l'étape a) consiste à coextruder avec la première couche (51), une seconde couche (52), disposée de préférence à l'intérieur de la paraison, et comprenant au moins en partie, un polyéthylène de basse ou très basse densité.

24. Procédé selon la revendication 23 **caractérisé en ce que** l'étape a) consiste à coextruder avec les première et seconde couches (51, 52), une troisième couche (53) contenant au moins en partie un polyéthylène de basse, ou très basse densité, la première couche (51) étant disposée entre les seconde (52) et troisième (53) couches.

25. Procédé selon la revendication 21 **caractérisé en ce que** la paraison comprend une première couche (54) formée, au moins pour partie, d'un polypropylène à haut module de flexion, et une seconde couche (55) formée, au moins pour partie, d'un polyéthylène de basse ou très basse densité.

26. Procédé selon la revendication 25 **caractérisé en ce que** la paraison comprend une troisième couche (56), ladite première couche (54) étant disposée entre les seconde (55) et troisième (56) couches.

27. Procédé selon la revendication 26 **caractérisé en ce que** la troisième couche (56) est formée, au moins pour partie, d'un polyéthylène de basse ou très basse densité.

28. Procédé de fabrication d'un article de conditionnement (100) selon l'une quelconque des revendications 1-19, consistant à :
a) par injection, réaliser une préforme, ladite préforme comprenant un polypropylène à haut module de flexion, et un polyéthylène de basse ou très basse densité ; et
b) souffler ladite préforme dans un moule finisseur comportant au moins une empreinte ayant une géométrie correspondant à celle dudit article de conditionnement.
